# EUROPÄISCHE PATENTSCHRIFT

(11) **EP 3 047 254 B1**
(45) Veröffentlichungstag und Bekanntmachung des Hinweises auf die Patenterteilung: **04.10.2017**
(21) Anmeldenummer: 14752783.2
(22) Anmeldetag: 11.08.2014
(51) Int. Cl.: G01N 19/04, C23C 4/02

(54) **VERFAHREN ZUM BESCHICHTEN EINES MIT ZUMINDEST EINEM BEFESTIGUNGSLOCH VERSEHENEN METALLTEILS**
METHOD FOR COATING A METAL PART PROVIDED WITH AT LEAST ONE FASTENING HOLE
PROCÉDÉ DE REVÊTEMENT D'UNE PIÈCE MÉTALLIQUE MUNIE D'AU MOINS UN TROU DE FIXATION

(30) Priorität: 17.09.2013 DE 102013110248
(43) Veröffentlichungstag der Anmeldung: 27.07.2016
(73) Patentinhaber: thyssenkrupp Rothe Erde GmbH, 44137 Dortmund (DE)
(72) Erfinder: LEONHARD, Markus, 33659 Bielefeld (DE); JÜRGENS, Reinhard, 59555 Lippstadt (DE)
(74) Vertreter: thyssenkrupp Intellectual Property GmbH
(86) Internationale Anmeldenummer: PCT/EP2014/002202
(87) Internationale Veröffentlichungsnummer: WO 2015/039721

(56) Entgegenhaltungen:
- EP-A1- 1 327 483
- FR-A1- 2 897 432

## Beschreibung

Die vorliegende Erfindung betrifft ein Verfahren zum Beschichten eines Metallteils, welches zumindest ein Loch insbesondere Befestigungsloch aufweist. Bei dem Metallteil kann es sich insbesondere um ein Großwälzlager oder einen Großwälzlagerring handeln.

Beschichtungen in Form von Verzinkungen, Pulverbeschichtungen, Lackierungen oder dergleichen dienen einem Schutz des metallischen Gegenstandes vor Korrosion oder anderen Oberflächenveränderungen. In der Produktion ist es dabei üblich, die Beschichtung einer Qualitätsprüfung zu unterziehen, um feststellen zu können, ob der mit der Beschichtung zu erzielende Schutz auch dauerhaft und zuverlässig erreicht wird.

Die Qualität der Beschichtung wird beispielsweise durch die Gleichmäßigkeit der Schicht, die Oberflächenstruktur, die Reib- und Verschleißfestigkeit sowie die Haftfestigkeit der Beschichtung auf dem Metallteil bestimmt. Für viele Anwendungen, wie z. B. bei Großwälzlagern, kommt der Haftfestigkeit der Beschichtung eine besondere Bedeutung zu, weil diese durch die Materialkombination von Metallteil und Beschichtung sowie dem konkret gewählten Auftragsverfahren und den dabei eingestellten Parametern abhängig ist.

Während bestimmte Parameter, wie die Schichtdicke einer Beschichtung, auch zerstörungsfrei bestimmt werden können, sind andere Qualitätsprüfungen, wie insbesondere die Bestimmung der Haftfestigkeit, in der Regel nicht zerstörungsfrei durchzuführen.

Vor diesem Hintergrund ist es bekannt, bei kleinen Bauteilen, welche als Massenartikel hergestellt werden, einzelne Bauteile auszusondern und einer Prüfung zu unterziehen, wobei diese beschädigt und danach entsorgt werden. Bei großen Bauteilen, wie beispielsweise Großwälzlagern oder Großwälzlagerringen, ist eine solche Vorgehensweise nicht zweckmäßig, weil einerseits nur Einzelstücke oder Kleinserien hergestellt werden und die Entsorgung eines entsprechend großen Gegenstandes nach einer zerstörenden Prüfung nicht hinzunehmen ist. Darüber hinaus ist die Beschichtung großer Metallteile, wie beispielsweise Großwälzlagerringen, ungleich aufwendiger als die Beschichtung in einer Massenfertigung, so dass auch die Prüfung eines aufwendig beschichteten großen Metallteils nicht ohne Weiteres auf ein anderes Metallteil übertragen werden kann.

Um dennoch eine zuverlässige Überprüfung der Beschichtung an großen Metallteilen vornehmen zu können, wird an einzelnen Stellen der beschichteten Oberfläche eine Qualitätsprüfung vorgenommen, wobei dann nach der Prüfung die entsprechende Stelle in der Regel nachbearbeitet, insbesondere neu beschichtet werden muss. Zunächst ergibt sich durch diese Verfahrensweise ein erheblicher Fertigungsaufwand, wobei der für die Qualitätsprüfung herangezogene Flächenabschnitt des beschichteten Metallteils auch nach einer Nachbehandlung eine potentielle Schwachstelle darstellt.

Vor diesem Hintergrund liegt der vorliegenden Erfindung die Aufgabe zugrunde, ein Verfahren zum Beschichten eines mit zumindest einem Loch versehenen Metallteils, bei dem auch eine Qualitätsprüfung der Beschichtung erfolgt, zu verbessern.

Gegenstand der Erfindung und Lösung der Aufgabe ist ein Verfahren zum Beschichten eines mit zumindest einem Loch versehenen Metallteils, insbesondere eines Großwälzlagers oder Großwälzlagerringes, wobei ein metallischer Stopfen in das Loch eingesetzt wird, wobei eine freiliegende Stirnfläche des Stopfens und eine an das Loch anschließende Fläche des Metallteils mit einer Beschichtung versehen werden, wobei der Stopfen aus dem Loch entfernt wird und wobei die mit der Beschichtung versehene Stirnfläche des Stopfens einer Qualitätsprüfung unterzogen wird.

Erfindungsgemäß wird nicht die beschichtete Oberfläche des Metallteils selbst, sondern ein separater, für die Funktion des Metallteils unbedeutender Stopfen untersucht, wobei aber durch die Qualitätsprüfung an dem Stopfen Rückschlüsse auf die Qualität der Beschichtung auf dem Metallteil möglich sind.

Dieses ist zunächst darauf zurückzuführen, dass der Stopfen und das Metallteil gleichzeitig in einem einheitlichen Beschichtungsverfahren mit der Beschichtung versehen werden. Wenn dabei beispielsweise Verfahrensparameter fehlerhaft eingestellt sind und sich dies negativ auf die Qualität der Beschichtung auswirkt, kann dies auch ohne Weiteres an dem Stopfen festgestellt werden.

Des Weiteren ist der Stopfen so ausgestaltet und angeordnet, dass die Qualitätsprüfung an dem Stopfen tatsächlich zuverlässige Rückschlüsse auf die Qualität der Beschichtung an dem Metallteil selbst ermöglicht. Insbesondere können das Metallteil und der Stopfen aus dem gleichen metallischen Werkstoff, also einer übereinstimmenden Legierung, gebildet sein. Grundsätzlich können auch gewisse Materialabweichungen in Kauf genommen werden, wenn dabei nicht mit einer grundsätzlich anderen Haftung der Beschichtung zu rechnen ist.

Darüber hinaus ist es auch von Vorteil, wenn die an das Loch anschließende Fläche des Metallteils und die Stirnfläche des Stopfens eine übereinstimmende oder zumindest vergleichbare Oberflächenstruktur aufweisen.

Bei dem Loch handelt es sich vorzugsweise um ein Befestigungsloch, mit welchem das Metallteil, vorzugsweise also ein Ring eines Großwälzlagers, montiert werden kann. Daneben kann es sich bei dem Loch aber beispielsweise auch um eine Bohrung zur Schmierung oder einem Loch für Transportzwecke handeln.

Vor einer Beschichtung sind das Metallteil und der Stopfen zu reinigen und insbesondere zu entfetten, wenn mit Verschmutzungen zu rechnen ist. Darüber hinaus können die Flächen auch mechanisch bearbeitet, beispielsweise geschliffen oder poliert werden, wobei eine solche Oberflächenbehandlung zweckmäßigerweise sowohl für das Metallteil als auch den Stopfen an seiner Stirnfläche erfolgt, damit die Qualität der Beschichtung tatsächlich zuverlässig verglichen werden kann.

Im Rahmen der Erfindung wird der Stopfen einerseits aus dem zugeordneten Loch entfernt und andererseits an seiner beschichteten Stirnfläche einer Qualitätsprüfung unterzogen. Die Reihenfolge der beiden Schritte ist jedoch im Rahmen der Erfindung nicht festgelegt. So kann der Stopfen beispielsweise auch bereits einer Qualitätsprüfung unterzogen werden, solange dieser noch in das zugeordnete Loch eingesetzt ist. Der Stopfen kann dann auch für einen Transport zunächst noch als Schutz in dem Befestigungsloch verbleiben.

Alternativ kann der Stopfen auch nach der Beschichtung noch vor der Qualitätsprüfung entfernt werden, so dass der Stopfen dann als einzelnes Teil leicht gehandhabt werden kann. Der Stopfen kann dann beispielsweise auch unabhängig von dem Metallteil selbst gehandhabt werden. So ist es beispielsweise möglich, die Qualitätsprüfung an dem Stopfen in einem externen Labor durchzuführen, ohne dass dafür das gesamte Metallteil transportiert werden muss.

Auch wenn der Stopfen vor der Qualitätsprüfung entfernt wird, kann dieser danach wieder als Schutz für einen Transport eingesetzt werden. Der Stopfen wird aber spätestens bei der Montage entfernt, so dass der Stopfen im montierten Zustand des Metallteils nicht mehr vorhanden ist.

Da der Stopfen nach der Qualitätsprüfung zunächst keine weitere Funktion hat, kann dieser abschließend entsorgt werden. Es besteht aber auch die Möglichkeit, den Stopfen zu Dokumentationszwecken aufzubewahren und zu archivieren. Schließlich kommt auch eine erneute Verwendung des Stopfens in Betracht, wobei gegebenenfalls die aufgebrachte Beschichtung wieder zu entfernen ist, um erneut eine einem unbehandelten Metallteil entsprechende Oberfläche bereitzustellen.

Die vorliegende Erfindung bezieht sich insbesondere auf große Metallteile, wie beispielsweise Ringe eines Großwälzlagers, weil bei kleinen Teilen aus der Massenfertigung eine nicht zerstörungsfreie Prüfung an einzelnen vollständigen Metallteilen durchgeführt werden kann, die nachfolgend als Ganzes entsorgt werden.

Das Metallteil kann im Rahmen der Erfindung beispielsweise ein Gewicht von mehr als 50 kg und vorzugsweise mehr als 100 kg aufweisen, so dass dann die Entsorgung eines solchen Metallteils mit sehr großen Kosten verbunden ist, selbst wenn ein Recyceln des Materials vorgesehen ist. Als Großwälzlagerringe werden im Rahmen der Erfindung Wälzlagerringe bezeichnet, welche einen Innendurchmesser von zumindest 50 cm, vorzugsweise zumindest 1 m aufweisen.

Das zu beschichtende Metallteil weist üblicherweise eine Vielzahl von Löchern, insbesondere Befestigungslöcher auf, wobei in mehrere, vorzugsweise alle Löcher jeweils ein Stopfen eingesetzt wird. Sämtliche Stopfen können dann abschließend für eine Qualitätsprüfung herangezogen werden.

Auch hinsichtlich dieses Aspektes ergeben sich im Rahmen der Erfindung verschiedene Ausgestaltungsmöglichkeiten. So kann beispielsweise an sämtlichen Stopfen eine übereinstimmende Qualitätsprüfung erfolgen, um sicherzustellen, dass die für die Beschichtung vorgegebenen Parameter an der gesamten Oberfläche bzw. zumindest an verschiedenen Stellen des Metallteils eingehalten sind. Darüber hinaus können an einem Stopfen oder besonders bevorzugt an unterschiedlichen Stopfen auch verschiedene Qualitätsprüfungen durchgeführt werden. Dabei ist zu beachten, dass bei vielen Qualitätsprüfungen wie bei einem Test der Abriebfestigkeit, der Schlagfestigkeit oder der Haftfestigkeit die Beschichtung zerstört oder zumindest beschädigt wird. Sofern derartige Tests nacheinander an einem Flächenabschnitt, also an einem Stopfen, durchgeführt werden, können diese sich gegenseitig beeinflussen und damit verfälschen. Wenn also gemäß einer bevorzugten Ausgestaltung der Erfindung mehrere Stopfen für eine Qualitätsprüfung zur Verfügung stehen, können diese unterschiedlichen Tests unterzogen werden, welche sich dann nicht gegenseitig negativ beeinflussen können.

Grundsätzlich besteht auch die Möglichkeit, einen Stopfen oder einen Teil der Stopfen zunächst ohne eine Qualitätsprüfung aufzubewahren, um auch langfristig die Qualität der Beschichtung nachweisen zu können, was gerade auch im Falle einer Reklamation vorteilhaft sein kann. An einzelnen Stopfen können auch langfristige Umwelteinflüsse oder dergleichen bestimmt werden.

Da die Löcher üblicherweise einen kreisrunden Querschnitt aufweisen, werden die Stopfen zweckmäßigerweise kegelstumpfförmig ausgestaltet, wobei sich der Stopfen ausgehend von der beschichteten bzw. zu beschichtenden Stirnfläche konisch verjüngt. Der Konuswinkel kann dabei zwischen 2° und 8°, beispielsweise bei etwa 4° liegen. Durch die Konusform wird bei dem Einsetzen der Stopfen in die Löcher zunächst eine Selbstzentrierung erreicht, wobei dann der Stopfen im eingesetzten Zustand auch ausreichend fest und sicher gehalten ist. Durch die Form eines Kegelstumpfes können auch Maßabweichungen des Innendurchmessers des Loches ausgeglichen werden, wobei dann der Stopfen abhängig von der Veränderung des Innendurchmessers des Loches mit seiner Stirnfläche unterschiedlich weit gegenüber der an das Loch anschließenden Fläche des Metallteils vorsteht.

Vorzugsweise ist dieser Überstand durch eine angepasste geometrische Ausgestaltung des Stopfens und des Loches bzw. der Löcher so gewählt, dass dieser weniger als 10 mm, vorzugsweise weniger als 5 mm beträgt. Durch einen solchen geringen Überstand kann erreicht werden, dass die Stirnfläche des Stopfens praktisch in die angrenzende Fläche integriert ist, wobei übereinstimmende oder zumindest vergleichbare Bedingungen bei der Beschichtung vorliegen. Darüber hinaus kann je nach Art der Beschichtung unmittelbar an dem Rand um den Stopfen herum auch ein gewisser Abschaltungseffekt nicht ausgeschlossen werden, der mit einem möglichst geringen Überstand klein gehalten werden kann.

Damit der Stopfen ausreichend tief in das Loch eingesetzt werden kann und dann sicher gehalten ist, beträgt die Höhe des Stopfens gemäß einer bevorzugten Ausgestaltung der Erfindung in etwa zwischen 40 % und 100 % des Durchmessers des Stopfens an seiner Stirnfläche. Der Stopfen weist damit also auch eine erhebliche Höhe auf, was gerade auch bei einer Beschichtung mit einem thermischen Beschichtungsverfahren von Bedeutung sein kann. Wenn die Beschichtung mit Flammspritzen, beispielsweise Zinkflammspritzen, einer Pulverbeschichtung mit aufschmelzendem Kunststoff oder einem anderen thermischen Beschichtungsverfahren aufgebracht wird, wird die Qualität der Beschichtung auch durch die Temperatur der Oberfläche bestimmt. Durch eine ausreichende Höhe des Stopfens kann dabei sichergestellt werden, dass die Temperaturverteilung an der Stirnfläche des Stopfens genau oder zumindest in etwa mit der Temperaturverteilung an der angrenzenden Fläche des Metallteils übereinstimmt. Schließlich stehen der Stopfen und das zugeordnete Loch auch in einem unmittelbaren mechanischen Kontakt, so dass ein Wärmeaustausch durch Wärmeleitung erfolgen kann.

Bei einem metallischen Teil in Form eines Großwälzlagerringes beträgt der Durchmesser eines Befestigungsloches typischerweise zwischen 20 mm und 100 mm. Dabei ist auch zu berücksichtigen, dass der Stopfen an seiner Stirnfläche eine ausreichende Größe haben muss, damit dort auf einfache und zuverlässige Weise die Qualität der Beschichtung überprüft werden kann.

Wie bereits zuvor erläutert, können an den Stopfen unterschiedliche Merkmale der Beschichtung überprüft werden. Gemäß einer bevorzugten Ausgestaltung der Erfindung erfolgt an zumindest einem Stopfen eine Bestimmung der Haftfestigkeit, wozu aus der Praxis verschiedene Methoden, nämlich eine Gitterschnittprüfung, eine Ritzhärteprüfung oder ein Pull-Off-Test vorgesehen sein können. Bei einer Haftfestigkeitsprüfung durch einen Pull-Off-Test wird ein Gegenhalter, der auch als Dolly bezeichnet wird, senkrecht auf die Beschichtung aufgeklebt, wobei dann der Gegenhalter durch ein Testgerät einer Zugkraft ausgesetzt wird. Das Testgerät stützt sich dabei vorzugsweise ringförmig um den Gegenhalter an der Stirnfläche des Stopfens ab. Die Zugkraft wird so lange erhöht, bis entweder ein vorgegebener Wert erreicht wird, die Verklebung aufbricht oder die Beschichtung sich von der Stirnfläche löst. Entsprechende Prüfmethoden werden in den Normen ASTM 4541, ASTM 7234 und ISO 4624 beschrieben.

Bei dem als Gegenhalter bezeichneten Dolly ist häufig gegenüberliegend der zum Verkleben mit der Beschichtung vorgesehenen Anlagefläche ein Kugelkopf gebildet, der bei dem Aufsetzen eine selbstständige Ausrichtung des Gegenhalters sowie eine gleichmäßige Aufbringung der Zugkräfte ermöglicht.

Die Erfindung wird im Folgenden anhand einer lediglich ein Ausführungsbeispiel darstellenden Zeichnung erläutert. Es zeigen:
- Fig. 1: ein Großwälzlagerring mit Befestigungslöchern in die jeweils einen Stopfen eingesetzt ist,
- Fig. 2: den Großwälzlagerring gemäß der Fig. 1 in einer perspektivischen Teilansicht,
- Fig.3: die Anordnung gemäß der Fig. 2 mit einem entnommenen Stopfen,
- Fig. 4: ein einzelner Stopfen in einem Querschnitt,
- Fig. 5: der Stopfen gemäß Fig. 4 nach der Beschichtung bei einer Prüfung der Haftfestigkeit.

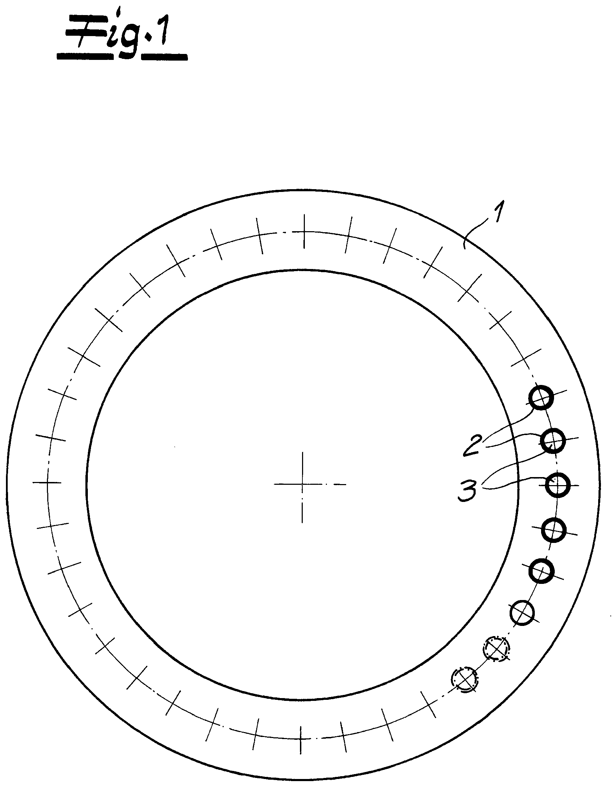

Die Fig. 1 zeigt einen Großwälzlagerring 1, der um seinen Umfang eine Vielzahl von Löchern 2 in Form von Durchgangsbohrungen aufweist. Die Löcher 2 sind für eine Befestigung des Großwälzlagerringes 1 vorgesehen. In die Löcher 2 ist jeweils ein Stopfen eingesetzt. Der Großwälzlagerring 1 mit den in den Löchern 2 eingesetzten Stopfen 3 wird sodann mit einer Oberflächenbeschichtung versehen, welche folglich auf den sichtbaren Stirnflächen 4 der Stopfen 3 und der an die Löcher 2 anschließenden Fläche des Großwälzlagerringes 1 gebildet wird.

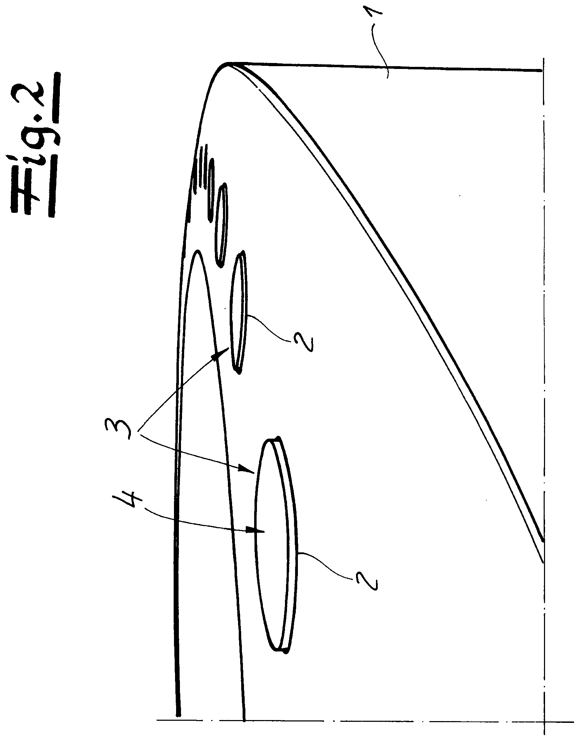

Die Fig. 2 zeigt einen Ausschnitt des Großwälzlagerringes 1 in einer perspektivischen Ansicht vor dem Beschichtungsvorgang. Die Innenflächen der Löcher 2 werden zwar durch die Stopfen 3 von einer Beschichtung ferngehalten, jedoch ist dort üblicherweise auch keine Beschichtung notwendig, weil die Löcher 2 im montierten Zustand durch Schrauben ausgefüllt und nach außen hin verdeckt sind.

In der Fig. 2 ist zu erkennen, dass die Stopfen 3 nur geringfügig, vorzugsweise weniger als 5 mm, mit der Stirnfläche 4 gegenüber der angrenzenden Fläche des Großwälzlagerrings 1 vorstehen, so dass sich bei dem Beschichtungsprozess keine wesentlichen Abschattungseffekte oder dergleichen ergeben können.

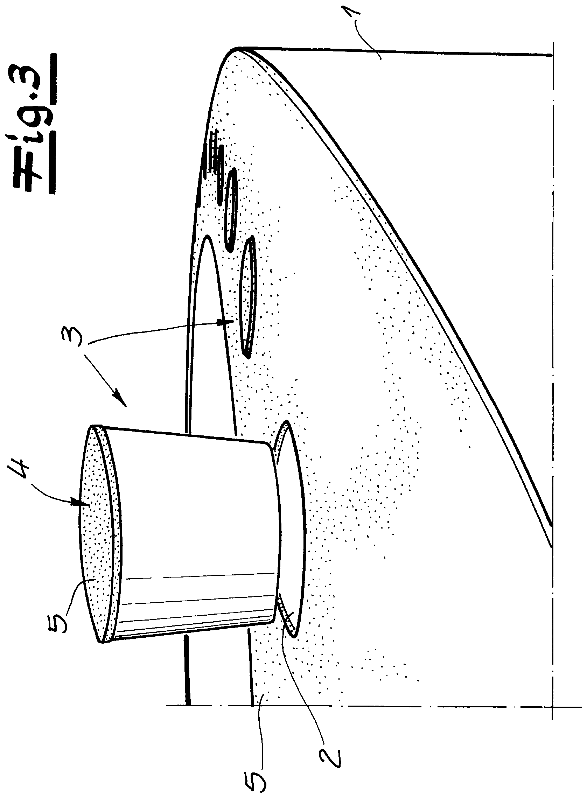

Die Fig. 3 zeigt den Großwälzlagerring 1 mit den in den Löchern 2 eingesetzten Stopfen 3 nach dem Beschichtungsvorgang, wobei exemplarisch einer der Stopfen 3 aus dem zugeordneten Loch 2 herausgenommen ist. An dem Stopfen erstreckt sich die Beschichtung 5 unterhalb der Stirnfläche 4 auch an einem kurzen Umfangsabschnitt.

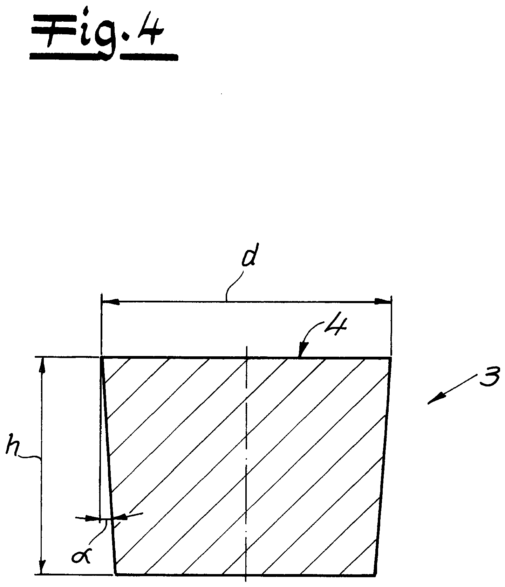

Die konkrete Ausgestaltung des Stopfens 3 ist in der Fig. 4 zu erkennen, welche einen unbeschichteten Stopfen 3 zeigt. Der Stopfen 3 weist die Form eines Kegelstumpfes auf, wobei der Kegelwinkel α, also die Verkippung der Mantelflächen gegenüber der Höhe h in dem dargestellten Ausführungsbeispiel beträgt. Ferner beträgt die Höhe h in dem dargestellten Ausführungsbeispiel etwa 75 % des Durchmessers d des Stopfens 3 an seiner Stirnfläche 4. Der Stopfen 3 und der Großwälzlagerring 1 sind aus dem gleichen Material gebildet und weisen in dem zu beschichtenden Bereich eine übereinstimmende oder zumindest im Wesentlichen übereinstimmende Oberflächenbeschaffenheit auf, so dass die Beschichtung an der Stirnfläche 4 des Stopfens 3 und an der angrenzenden Fläche des Großwälzlagerringes 1 in gleicher Weise anhaftet.

Die einzelnen Stopfen 3 können dann für eine Qualitätsprüfung der Beschichtung 5 herangezogen werden, ohne dass der Großwälzlagerring 1 durch eine nicht zerstörungsfreie Prüfung beschädigt wird.

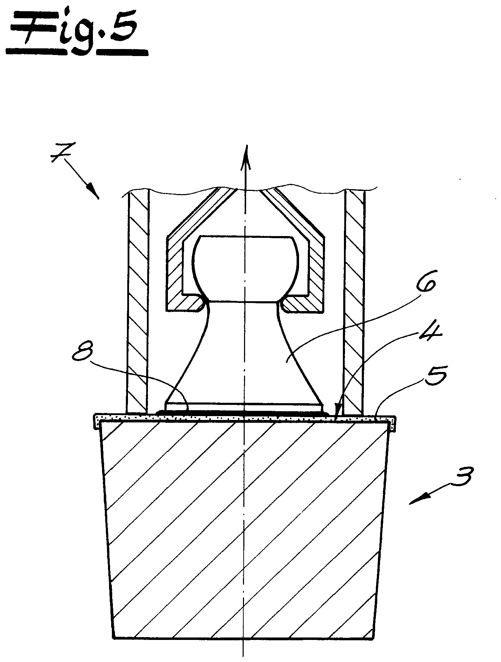

So zeigt die Fig. 5 einen Pull-Off-Test zur Bestimmung der Haftfestigkeit. Die Beschichtung 5 ist an der Stirnfläche 4 des Stopfens 3 mit einem Gegenhalter 6 verklebt, der auch als Dolly bezeichnet wird. Mit einem Testgerät 7, welches sich ringförmig um dem Gegenhalter 6 herum an der Stirnfläche 4 abstützt, wird eine Zugkraft auf den Gegenhalter 6 ausgeübt, bis eine Trennung an dem Klebstoff 8 auftritt, eine Trennung der Beschichtung 5 von der Stirnfläche 4 auftritt oder ein vorgegebener Wert erreicht wird.

## Patentansprüche

1. Verfahren zum Beschichten eines mit zumindest einem Loch (2) insbesondere einem Befestigungsloch versehenen Metallteils, insbesondere eines Großwälzlagers oder Großwälzlagerringes (1),
wobei ein metallischer Stopfen (3) in das Loch (2) eingesetzt wird,
wobei eine freiliegende Stirnfläche (4) des Stopfens (3) und eine an das Loch (2) anschließende Fläche des Metallteils mit einer Beschichtung (5) versehen werden,
wobei der Stopfen (3) aus dem Loch (2) entfernt wird und
wobei die mit der Beschichtung (5) versehene Stirnfläche (4) des Stopfens (3) einer Qualitätsprüfung unterzogen wird.

2. Verfahren nach Anspruch 1, wobei ein Stopfen (3) mit der Form eines Kegelstumpfes eingesetzt wird.

3. Verfahren nach Anspruch 1 oder 2, wobei die Form des Stopfens (3) derart auf das zugeordnete Loch (2) abgestimmt wird und der Stopfen (3) derart in das Loch (2) eingesetzt wird, dass dieser mit seiner Stirnfläche (4) weniger als 10 mm, vorzugsweise weniger als 5 mm gegenüber der an das Loch (2) anschließenden Fläche des Metallteils vorsteht.

4. Verfahren nach einem der Ansprüche 1 bis 3, wobei die Höhe (h) des Stopfens (3) zwischen 40 % und 100 % des Durchmessers (d) an der Stirnfläche (4) beträgt.

5. Verfahren nach einem der Ansprüche 1 bis 4, **dadurch gekennzeichnet, dass** der Durchmesser (d) des Lochs (2) zwischen 20 mm und 100 mm beträgt.

6. Verfahren nach einem der Ansprüche 1 bis 5, wobei das Metallteil ringförmig ist und eine Vielzahl von Löchern (2) aufweist, wobei in mehrere Löcher (2) jeweils ein Stopfen (3) eingesetzt wird.

7. Verfahren nach einem der Ansprüche 1 bis 6, wobei das Metallteil und der Stopfen (3) aus dem gleichen metallischen Werkstoff gebildet werden.

8. Verfahren nach einem der Ansprüche 1 bis 7, wobei das Metallteil und der Stopfen (3) vor dem Beschichtungsvorgang einer übereinstimmenden Oberflächenbehandlung unterzogen werden.

9. Verfahren nach einem der Ansprüche 1 bis 8, wobei zur Qualitätsprüfung an dem Stopfen (3) eine Haftfestigkeitsprüfung durchgeführt wird, bei der ein Gegenhalter (6) auf die Beschichtung (5) aufgeklebt wird und der Gegenhalter (6) durch ein Testgerät (7) einer Zugkraft ausgesetzt wird.

10. Verfahren nach einem der Ansprüche 1 bis 9, wobei die Beschichtung (5) in einem thermischen Beschichtungsverfahren aufgebracht wird.

## Claims

1. Method for coating a metal part provided with at least one hole (2), in particular a fastening hole, in particular a large roller bearing or a large roller bearing ring (1),
in which a metallic plug (3) is inserted into the hole (2),
in which a free end face (4) of the plug (3) and a face, adjoining the hole (2), of the metal part are provided with a coating (5),
in which the plug (3) is removed from the hole (2), and
in which the end face (4) of the plug (3), provided with the coating (5), undergoes quality testing.

2. Method according to Claim 1, in which a plug (3) having the form of a truncated cone is used.

3. Method according to Claim 1 or 2, in which the shape of the plug (3) is matched to the associated hole (2), and the plug (3) is inserted into the hole (2), such that the end face (4) of the plug is less than 10 mm, preferably less than 5 mm proud of the face, adjoining the hole (2), of the metal part.

4. Method according to one of Claims 1 to 3, in which the height (h) of the plug (3) is between 40% and 100% of the diameter (d) at the end face (4).

5. Method according to one of Claims 1 to 4, **characterized in that** the diameter (d) of the hole (2) is between 20 mm and 100 mm.

6. Method according to one of Claims 1 to 5, in which the metal part is annular and has a multiplicity of holes (2), with multiple holes (2) each having a plug (3) inserted therein.

7. Method according to one of Claims 1 to 6, in which the metal part and the plug (3) are made of the same metallic material.

8. Method according to one of Claims 1 to 7, in which the metal part and the plug (3) undergo a concurring surface treatment prior to coating.

9. Method according to one of Claims 1 to 8, in which the quality testing of the plug (3) involves carrying out an adhesion strength test in which a counter-holder (6) is adhesively bonded to the coating (5) and a tensile force is applied to the counter-holder (6) by a testing device (7).

10. Method according to one of Claims 1 to 9, in which the coating (5) is applied in a thermal coating process.

## Revendications

1. Procédé de revêtement d'une pièce métallique munie d'au moins un trou (2), en particulier d'un trou de fixation, en particulier d'un palier à roulement de grand diamètre ou d'une couronne d'orientation de grand diamètre (1),
dans lequel on introduit un bouchon métallique (3) dans le trou (2),
dans lequel on munit une face frontale libre (4) du bouchon (3) et une face de la pièce métallique adjacente au trou (2) d'un revêtement (5),
dans lequel on enlève le bouchon (3) hors du trou (2), et
dans lequel on soumet la face frontale (4) du bouchon (3) munie du revêtement (5) à un contrôle de qualité.

2. Procédé selon la revendication 1, dans lequel on introduit un bouchon (3) ayant la forme d'un tronc de cône.

3. Procédé selon la revendication 1 ou 2, dans lequel on accorde la forme du bouchon (3) au trou associé (2) et on introduit le bouchon (3) dans le trou (2) de telle manière que celui-ci dépasse avec sa face frontale (4) de moins de 10 mm, de préférence de moins de 5 mm, par rapport à la face de la pièce métallique adjacente au trou (2).

4. Procédé selon l'une quelconque des revendications 1 à 3, dans lequel la hauteur (h) du bouchon (3) vaut entre 40 % et 100 % du diamètre (d) à la face frontale (4).

5. Procédé selon l'une quelconque des revendications 1 à 4, **caractérisé en ce que** le diamètre (d) du trou (2) vaut entre 20 mm et 100 mm.

6. Procédé selon l'une quelconque des revendications 1 à 5, dans lequel la pièce métallique est de forme annulaire et présente une multiplicité de trous (2), dans lequel on introduit respectivement un bouchon (3) dans plusieurs trous (2).

7. Procédé selon l'une quelconque des revendications 1 à 6, dans lequel on forme la pièce métallique et le bouchon (3) à partir du même matériau métallique.

8. Procédé selon l'une quelconque des revendications 1 à 7, dans lequel on soumet la pièce métallique et le bouchon (3) à un traitement de surface concordant avant l'opération de revêtement.

9. Procédé selon l'une quelconque des revendications 1 à 8, dans lequel on effectue sur le bouchon (3), pour le contrôle de qualité, un essai d'adhérence au cours duquel on colle un moyen antagoniste (6) sur le revêtement (5) et on soumet le moyen antagoniste (6) à une force de traction au moyen d'un appareil d'essai (7).

10. Procédé selon l'une quelconque des revendications 1 à 9, dans lequel on dépose le revêtement (5) par un procédé de revêtement thermique.
